# FASCICULE DE BREVET EUROPEEN

(11) **EP 3 781 978 B1**
(45) Date de publication et mention de la délivrance du brevet: **03.01.2024**
(21) Numéro de dépôt: 19726147.2
(22) Date de dépôt: 15.04.2019
(51) Int. Cl.: G01B 5/00

(54) **DISPOSITIF DE POSAGE DE COMPOSANTS**
VORRICHTUNG ZUM PLATZIEREN VON BAUTEILEN
DEVICE FOR PLACING COMPONENTS

(30) Priorité: 17.04.2018 CH 4852018; 24.09.2018 CH 11582018
(43) Date de publication de la demande: 24.02.2021
(73) Titulaire: Totems Position Sàrl, 2056 Dombresson (CH)
(72) Inventeur: ORHANOVIC, Toni, 2036 Dombresson (CH)
(74) Mandataire: P&TS SA (AG, Ltd.)
(86) Numéro de dépôt international: PCT/IB2019/053078
(87) Numéro de publication internationale: WO 2019/202466

(56) Documents cités:
- EP-A1- 2 317 042
- FR-A1- 2 530 042
- FR-A1- 2 957 904
- US-A- 4 836 667
- US-B1- 7 682 573

## Description

### Domaine technique

La présente invention concerne un dispositif modulaire de solutions de posages, pour le contrôle dimensionnel et esthétique de petites pièces, au moyen d'appareils de contrôle manuels ou automatisés.

### Etat de la technique

Le contrôle de qualité de produits, en laboratoire ou lors de leur fabrication, implique souvent une inspection au moyen d'un appareil de contrôle optique. On connaît ainsi par exemple des appareils de contrôle optique de type :
- Projecteurs de profile standards (analogiques)
- Projecteurs de profile avec traitement informatique de l'image, notamment pour la mesure plein champ (sans contrainte de localisation) et/ou pour la mesure d'une pièce après positionnement XY (avec contrainte de localisation)
- Microscopes divers
- Binoculaires divers
- Machines de contrôle à rayons-X (ex. Fisherscopes)
- Instruments à palpeurs (ex. divers rugosimètres)
- Etc

Selon la forme des pièces, des géométries à contrôler et également du type de machine utilisée, diverses méthodes de positionnement de la pièce sur la machine sont fréquemment mises en oeuvre :
- positionnement libre, typiquement mis en oeuvre pour des pièces qui se maintiennent à plat et perpendiculairement à l'axe de l'optique du moyen de mesure.
- positionnement aligné, typiquement mis en oeuvre pour des pièces qui ne se positionnent pas systématiquement de manière perpendiculaire à l'axe de l'optique ou de manière alignée à l'élément de contact mécanique (par exemple pour des pièces cylindriques comportant divers diamètres, ou des surfaces plates trop petites pour garantir le maintien de la pièce en équilibre).

Des supports de positionnement sont fréquemment mis en oeuvre pour positionner les pièces à inspecter pendant leur inspection au moyen d'un appareil d'inspection optique. Les supports connus sont peu flexibles et généralement dédiés à un type de machine. Ils sont aussi généralement dédiés à un type de pièce, et offrent peu de flexibilité pour le positionnement de pièces de formes variables. Ils permettent soit un positionnement libre, soit un positionnement aligné, mais généralement pas les deux. Enfin, les possibilités de réglage pour un positionnement précis des pièces à inspecter, ou de chaque pièce individuelle, sont limitées.

US4836667 décrit un microscope comprenant un cadre de base, une platine placée sur ou au-dessus du cadre de base et un support placé sur la platine et adapté pour supporter une pluralité d'échantillons

US7682573 décrit une plaque de microscope comprenant une plateforme de base et une plateforme d'indexation. La plateforme d'indexation comporte une glissière pour recevoir de manière coulissante une plaque cristallographique ou une autre plaque de microscope.

### Bref résumé de l'invention

Un but de la présente invention est de proposer un support de positionnement de pièces pendant leur inspection qui soit exempt des limitations des supports connus.

Un autre but de l'invention est de proposer un support polyvalent, tant en matière de compatibilité machine que de la variété de pièces à mesurer et de positionnements possibles.

Un autre but de l'invention est de proposer un support comportant des éléments interchangeables et combinables afin de permettre des configurations de posage adaptées à des pièces et à des besoins d'inspection optique variés et complexes.

Un autre but de l'invention est de proposer un support comportant des éléments interchangeables afin de permettre des réglages complexes.

Un autre but de l'invention est de proposer un support permettant d'augmenter la quantité de pièces positionnables par posage.

Un autre but de l'invention est de proposer un support assurant une haute précision et répétabilité des positionnements.

Selon l'invention, ces buts sont atteints notamment au moyen d'un support de positionnement pour le positionnement de composants à inspecter pendant leur inspection au moyen d'un appareil de contrôle optique, comportant :
un socle d'emboîtage agencé pour être indexé et centré sur une base de l'appareil de contrôle un socle de coulissement pouvant coulisser selon un axe « Y » dans un plan du socle d'emboîtage perpendiculaire à l'axe optique, le socle d'emboîtage servant d'interface entre l'appareil de contrôle optique et le socle de coulissement;
une platine pouvant coulisser selon un axe « X » perpendiculaire à l'axe « Y » dans un plan parallèle audit plan du socle de coulissement, le socle de coulissement servant d'interface entre le socle d'emboitage et la platine ;
des éléments interchangeables configurés pour être fixé à la platine et comprenant des gabarits pour le positionnement libre de plusieurs composant à mesurer sur ladite platine et des éléments d'alignement tels que des barrettes pour le positionnement aligné de plusieurs composants à mesurer sur ladite platine.

Les composants à mesurer peuvent être maintenus au moyen d'éléments de maintien eux-mêmes positionnés sur la platine.

### Brève description des figures

Des exemples de mise en oeuvre de l'invention sont indiqués dans la description illustrée par les figures annexées dans lesquelles :
- La figure 1 illustre une vue en perspective d'un exemple de support selon l'invention.
- La figure 2 illustre une vue de détail en perspective d'un exemple de support selon l'invention, avec un agrandissement d'une portion circulaire.
- La figure 3 illustre une vue en perspective d'un exemple de socle d'emboitage.
- La figure 4 illustre une vue en perspective d'un exemple de socle de coulissement.
- La figure 5 illustre un exemple de support adapté à la mesure en vrac.
- La figure 6 illustre un exemple de platine équipée adaptée à la mesure alignée.
- La figure 7 illustre une vue de dessus d'un exemple de platine coulissante équipée adaptée à la mesure alignée.
- La figure 8 illustre un exemple des divers composants constitutifs des niveaux d'assemblage ou de composition d'une platine
- La figure 9 illustre un exemple de barrette longitudinale, comportant une barrette de base, un poussoir de barrette, deux inserts et une barrette coulissante.
- La figure 10 illustre différents exemples d'éléments d'alignement : des lamelles de maintien, des butées d'alignement, des barrettes transversales à pointes, des barrettes tendeurs de lamelles fines, des barrettes transversales magnétiques, des barrettes transversales à plaquette en verre.
- La figure 11 illustre différents exemples d'éléments (inserts) de fixation des lamelles et barrettes transversales .
- La figure 12 illustre une vue en perspective d'un socle d'alignement.

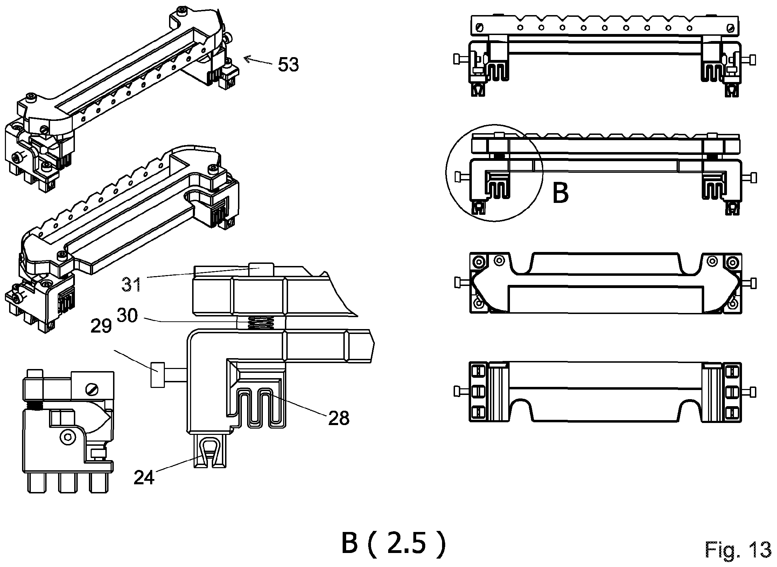

- La figure 13 illustre des vues représentatives d'une barrette transversale avec un tendeur de lamelles.

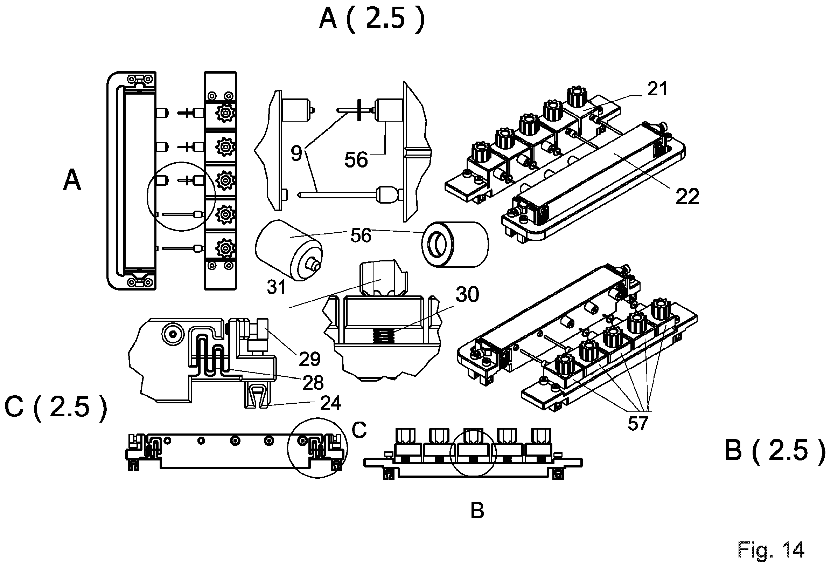

- La figure 14 illustre des vues représentatives d'une paire de barrettes transversales magnétiques ou à aimants.
- La figure 15 illustre des vues représentatives d'une barrette transversale à pointes.
- La figure 16 illustre des vues de variantes de configuration de vissage, respectivement de réglage des déplacements en Z.

### Exemple(s) de mode de réalisation de l'invention

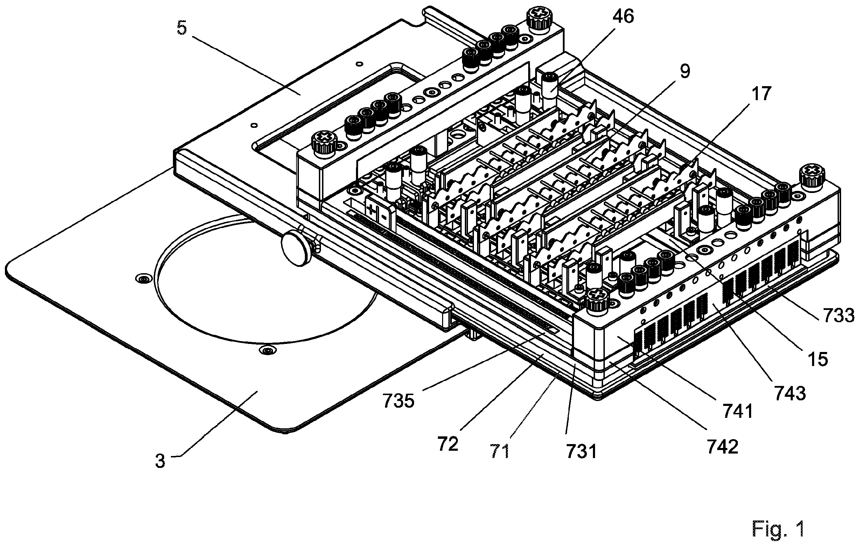

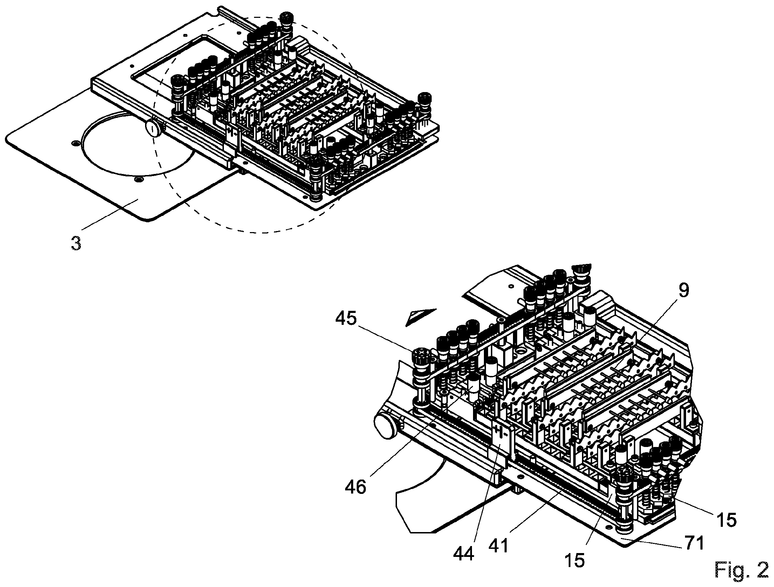

Un exemple de support 1 est illustré sur les figures 1 et 2. Il comporte par exemple notamment les composants suivants :

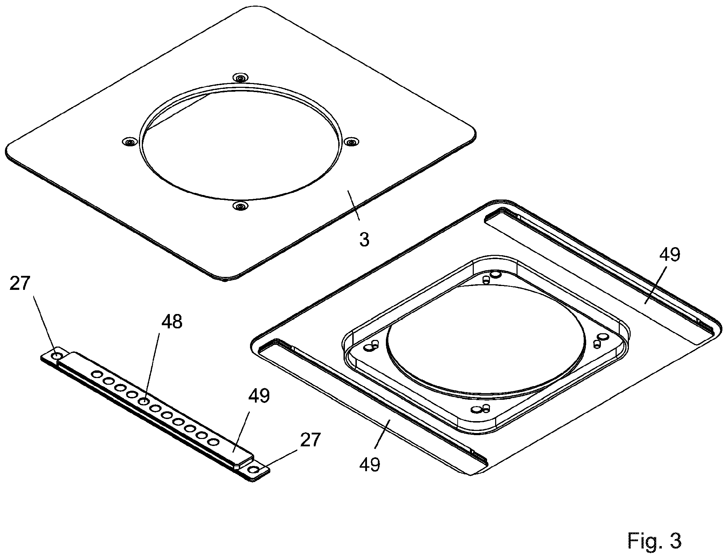

Socle d'emboîtage 3 : (figure 3) : socle qui sert d'interface entre l'appareil de contrôle optique et le socle de coulissement 5. Le socle d'emboîtage s'indexe et se centre sur la base de l'appareil de contrôle. Le socle d'emboitage est muni de rangées d'aimants 48 intégrés dans des barrettes amovibles 49 venant se fixer par aimantation 27 de chaque côté du socle d'emboitage dans le sens du coulissement du socle de coulissement 5.

Des socles d'emboitage 3 peuvent être remplacés pour s'adapter à différents appareils de contrôle. Des socles d'emboîtage différents peuvent être réalisés pour différents types d'appareils. Les figures 1 et 3illustrent un socle sur mesure, fait pour un appareil de contrôle spécifique, dans ce cas un projecteur de profile KEYENCE IM-6140. On pourrait aussi imaginer des socles universels, qui par un système de « bagues » de profile rond et/ou carré permettent de s'adapter aux profils de divers appareils de contrôle optique.

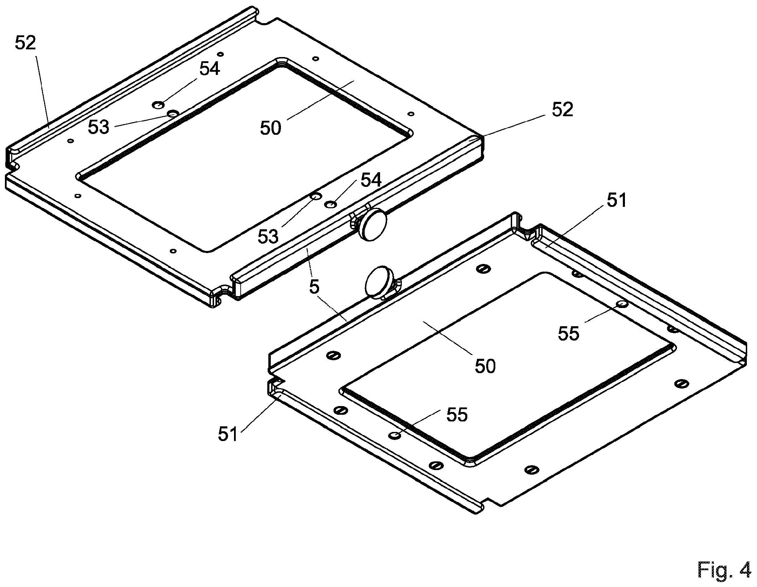

Socle de coulissement 5 (figure 4) : sert d'interface entre le socle d'emboîtage 3 et la platine coulissante 7. Il a la fonction de coulisser selon une direction « Y » dans le plan du socle d'emboîtage, c'est-à-dire un plan traversant le socle de coulissement perpendiculaire à l'axe optique de l'appareil de contrôle optique.

Le socle de coulissement 5 comporte un cadre 50 muni de rabats 51, 52 qui servent de rails de coulissement. Les rabats inférieurs 51 qui se déploient sur l'axe « Y » servent à coulisser le long du socle d'emboîtage 3. Les rails supérieurs 52 qui se déploient selon l'axe « X » servent au coulissement des platines coulissantes 7. Des aimants 53, 54, 55 pour l'indexation des contre-éléments coulissants 3, 7 sont logés au centre de chacune des zones rabattues ou rails, dans des logements prévus à cet effet et visibles sur la figure 4. Les aimants supérieurs extérieurs 54 (côté des rabats) servent à l'indexation des platines de positionnement aligné. Les aimants supérieurs intérieurs 53 (coté cadre intérieur) servent à l'indexation des platines de positionnement libre. Les aimants inférieurs (55) servent à l'indexation avec les divers socles d'emboitage 3.

Il est aussi possible de remplacer les rabats 51 par des coulisses sur le socle d'emboitage, dans lesquelles coulisse le cadre 5. De même, il est possible de remplacer les rabats 52 par des coulisses sur la platine 7, dans lesquelles coulisse le cadre 5.

Platine coulissante 7 (figures 1,2, 7 et 8) : permet de coulisser selon l'axe « X » perpendiculaire à X dans le plan du socle de coulissement 5. Elle sert à y placer les pièces 9 à mesurer. Différents types de platines interchangeables peuvent être montées sur le socle de coulissement 5, selon le type de positionnement libre ou aligné. La taille de la platine est avantageusement comprise entre 13x13 cm et 24x24cm par exemple 15x18 cm. Les platines coulissantes sont composées de plusieurs niveaux, de préférence quatre niveaux. Chaque niveau peut accueillir différents types de composants à sélectionner selon le type de positionnement souhaité et selon la complexité des pièces à contrôler.

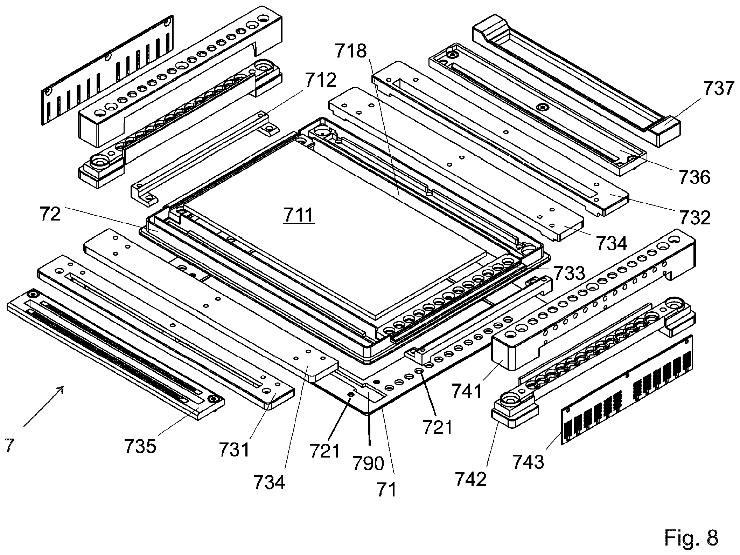

Le premier niveau correspond à la base de platine 71 (figures 2 et 8).

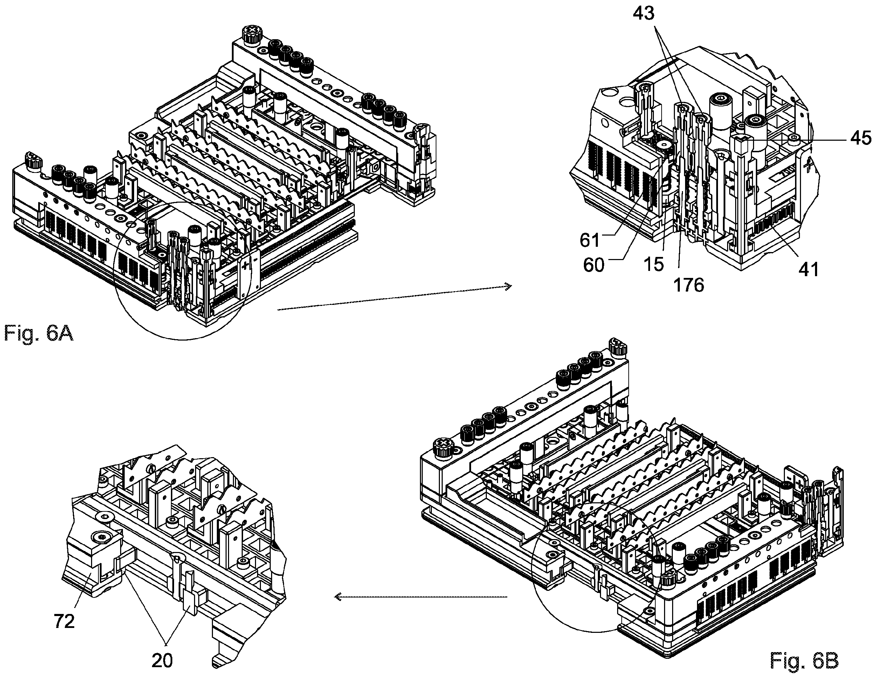

Le deuxième niveau correspond au cadre de platine 72 (figures 6 et 8).

Le troisième niveau correspond aux caches du cadre de platine (figure 8): le cache longitudinal standard 734 sert à fermer les parties longitudinales avant et/ou arrière du cadre de platine lorsqu'aucun autre cache ne s'avère applicable ou nécessaire, par exemple pour les platines de contrôle sur vitre en positionnement libre (vrac). Le cache longitudinal avant 731 sert à compléter et fermer la partie longitudinale avant du cadre de platine, lorsque cette dernière est configurée avec le système de réglage en Z synchrone à courroie longitudinale. Le cache longitudinal métrique 735 sert à couvrir le cache longitudinal de courroie, à guider la poignée de déplacement de courroie longitudinale et à indiquer la conversion de la distance du déplacement des éléments de réglage en Z, correspondante à la distance de déplacement de la courroie longitudinale. Le cache longitudinal arrière 732 sert à fermer la partie longitudinale arrière du cadre de platine, lorsque cette dernière est configurée avec des indexes de positionnement de platine en X. Le cache longitudinal support 736 sert à couvrir le cache longitudinal des indexes X ou à couvrir tout autre cache longitudinal compatible tout en servant de support de bac longitudinal. Le bac longitudinal de platine 26 sert à y placer des pièces à contrôler. Le cache latéral de platine 733 sert à fermer les parties latérales du cadre de platine, à guider, indexer, fixer ou servir d'appui aux divers éléments du système de réglage en Z (tels que : vis de réglage en Z, les ressorts de contrainte des barrettes longitudinales de base, les embases servant de pivots aux vis de réglage en Z).

Le quatrième niveau correspond aux blocs latéraux de montée « Z ». La partie haute 741 sert à guider, indexer, fixer ou servir d'appui aux divers éléments du système de réglage en Z (tels que : vis de réglage en Z, les ressorts de contrainte des barrettes longitudinales de base, les embouts et capuchons d'engagement et de vissage des vis de réglage en Z,) et aux éléments du système de courroie latérale. La partie basse 742 sert à compléter et fermer la partie haute du bloc latéral de platine, notamment lorsque cette dernière est configurée avec le système de réglage en Z synchrone à courroies latérales. Le cache latéral de platine métrique 743 sert à indiquer la distance de déplacement en Z des barrettes longitudinales de base.

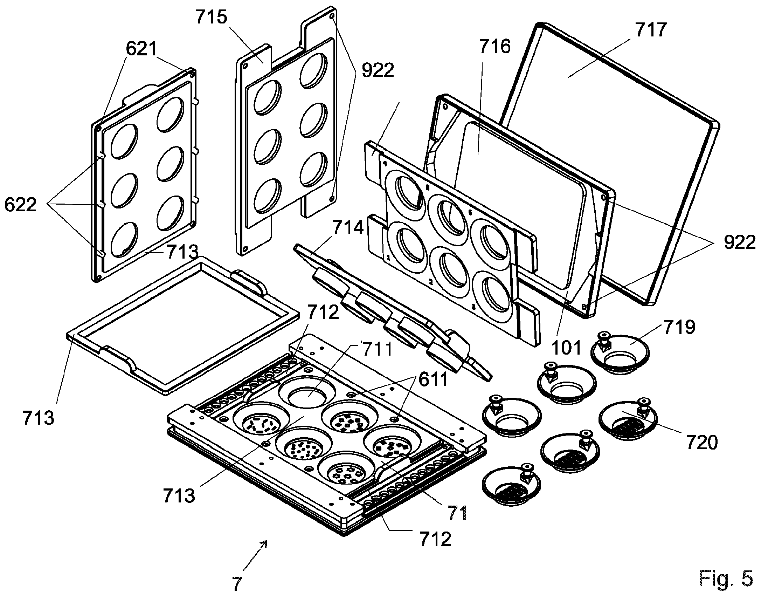

Dans le cas d'un positionnement libre (figure 5), la platine 7 comporte avantageusement une vitre 711 et des brides de fixation de vitre 712 (figure 5 et 8). Différents composants peuvent être placés sur la vitre, par exemple un gabarit de segmentation de base 713, un gabarit entonnoir groupé 714 ou des gabarits entonnoirs individuels sans sous-segments 719 ou avec sous segments 720 qui servent tous au versement et prépositionnement des pièces 9 (5). Le gabarit comporte par exemple six ou un autre nombre de segments numérotés 611 pour le positionnement des composants. Le gabarit de base 713 est choisi parmi un ensemble de gabarits interchangeable de diverses formes et tailles (selon la machine de contrôle et les niveaux de grossissement utilisés) et fixé à la platine, sur la vitre, au moyen d'aimants 621, dans les 4 coins, par aimantation aux brides de fixation de vitre 714. Les gabarits de base 713 comportent aussi des aimants 622 alignés avec les segments du gabarit, afin que, au fur et à mesure des coulissements, ce dernier s'indexe avec les aimants 53 du socle de coulissement 5 et par conséquent avec l'axe de l'optique.

La récupération des pièces posées sur la vitre peut se faire en vrac, en enlevant le gabarit de segmentation 713 et en laissant les pièces glisser par un espace 718 (figure 8) prévu entre la vitre et la bordure longitudinale intérieure de la platine 7 dans le bac de récupération de platine vitrée 717 (5). Dans une variante, on peut récupérer les pièces de manière segmentée, en utilisant un gabarit inverse 715 (figure 5) qui est fixé par des aimants 922 aux quatre coins avec le bac de récupération de gabarit inverse 716. Les deux éléments 715 et 716 sont emboîtés sur le gabarit de base 713 puis la platine est renversée de manière que les pièces 9 soient transférées dans le bac de récupération 716 en respectant la même segmentation numérotée 911 que celle du gabarit de base. Finalement, l'enlèvement du gabarit inverse 715 permettra à nouveau de récupérer les pièces en vrac, en les faisant glisser dans les canaux 101 du bac de récupération 716 prévus à cet effet.

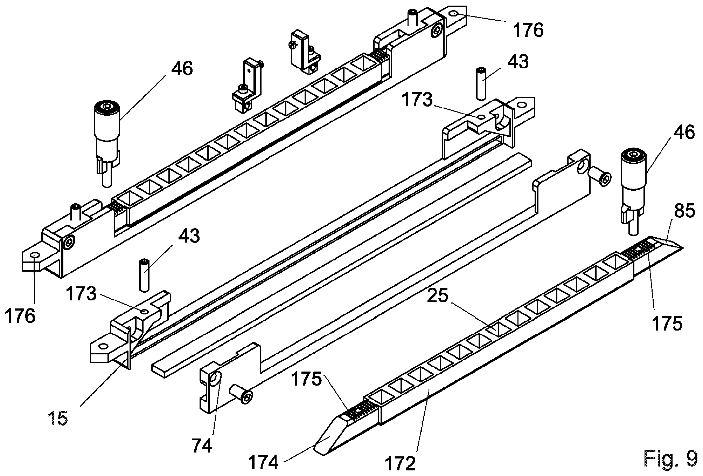

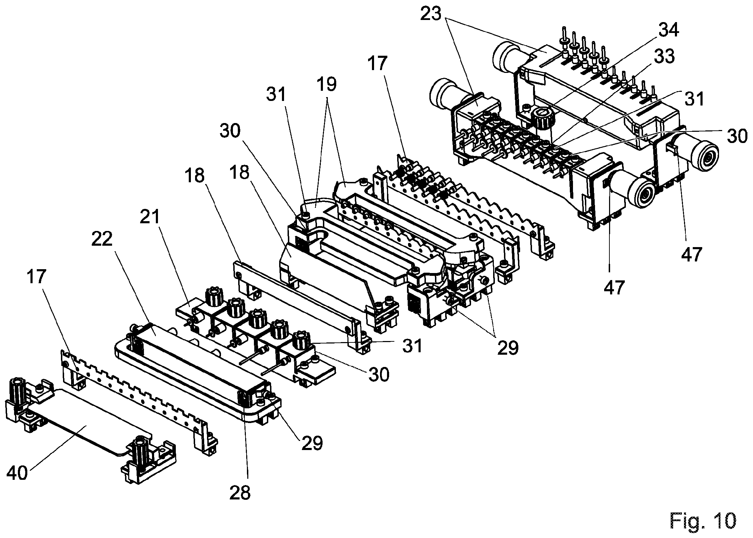

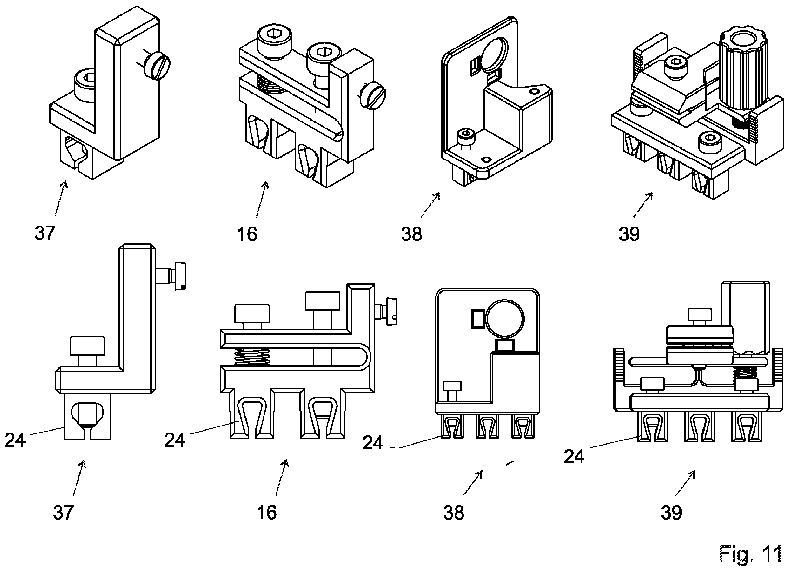

Dans le cas d'un positionnement aligné (figures 1,2, 6 et 7), la platine peut comporter plusieurs niveaux. Chaque niveau peut être arrangé et équipé de manière variable selon la complexité des pièces et des options de positionnement et orientation souhaitées. A cet effet, la platine peut supporter des éléments d'alignement tels que : barrettes longitudinales 15 (figure 9), différents types d'inserts de fixation de lamelles 16,37,38,39 (figure 11), de lamelles 17 (figure 10), de butées 18 (figure 10), plaquettes 40 (figure 5)(variantes de lamelles orientées à plat pouvant également être vitrées), indexes (petits inserts qui se placent sur les lamelles pour numéroter les pièces et le logement sur lequel elles sont placées), diverses barrettes transversales telles que : tendeurs de lamelles 19 (figure 10), barrettes magnétiques 21,22 (figure 10,), barrette à pointes 23 (figure 10), barrettes vacuum (barrettes à tubulure intérieure débouchant sur les trous de succion qui permettent de maintenir les pièces par succion vacuum), barrettes à lamelles de pincement (barrettes avec trois lamelles fines plaquées ensemble avec des trous en forme de losange où la lamelle centrale glisse entre les deux autres, ce qui de par leur décalage permet de pincer la pièce qui les traverse). Les barrettes 15 permettent de poser des pièces à inspecter sur les lamelles 17. Les butées 18 permettent ensuite de bloquer leur position en X, par exemple en faisant coulisser une barrette coulissante à l'aide de poussoirs 46 (pièces cylindriques allongées sur la figure 6), ou en inclinant le support pour que tous les composants s'appuient contre une telle lamelle.

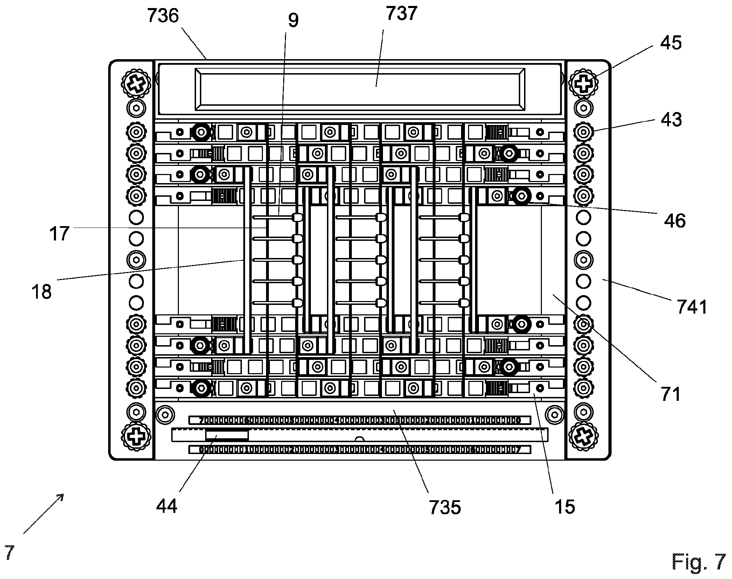

La base de platine 71 (figure 5 et 7) comporte un cadre de base comprenant des perçages 721 servant à l'alignement et fixation des éléments supérieurs. La partie longitudinale externe de ce cadre s'insère et coulisse dans la coulisse supérieure 52 du socle de coulissement 5. Les ouvertures longitudinales 790 servent au placement de vis ou d'aimants 20 (figure 6) qui servent à l'indexation des platines 7 avec les aimants 54 du socle de coulissement 5.

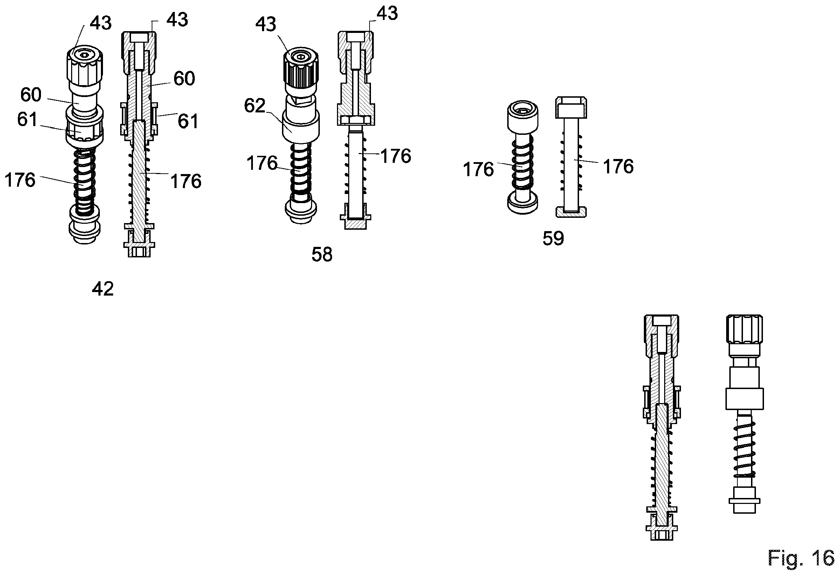

Le cadre de platine 72 (figure 1) peut loger des coulisses et/ou des courroies 41 (figures 2 et 6) pour l'entrainement par exemple au moyen de la poignée 44 (figure 2) et le déplacement des éléments 42 (figure 6) d'alignement en Z. L'utilisation de courroies permet de régler simultanément la position en Z de plusieurs barrettes longitudinales 15 sur la platine. Il est aussi possible de sélectionner individuellement les éléments à coupler à la courroie en actionnant verticalement le poussoir 60 qui se couple avec la poulie 61 (figure 16), ou de les visser manuellement, en tournant la molette 43 (figure 16). Il est également possible de n'utiliser que les courroies latérales qu'il sera alors possible d'actionner au moyen de la molette 45 (figures 2,6 et 7). Lors d'utilisations de platines avec des changements de réglages en Z peu fréquents, il est également possible de n'utiliser aucune courroie et d'effectuer tous les vissages individuellement, soit manuellement avec l'ensemble de vis 58 (figure 16), soit avec un tournevis pour l'ensemble de vissage 59 (figure 16).

Des barrettes longitudinales 15 sont montées sur la platine 7, par exemple en étant vissées dans les caches latéraux 733 (figure 1) et s'étendent selon l'axe X. Les barrettes longitudinales 15 servent à régler le positionnement de manière reproductible dans l'axe « X » des divers éléments qui s'y fixent. Les barrettes longitudinales sont composées de deux éléments principaux : la barrette de base 171 et la barrette coulissante 172 (figure 9). La fixation des divers éléments (inserts 16, 37, 38, 39 et barrettes transversales 19, 20, 21, 22, 23) sur la barrette coulissante se fait en insérant leurs pattes d'insertion 24 dans les logements de profil carré 25 de la barrette coulissante. Après insertion, la fixation définitive se fait au moyen de vis qui écartent les pattes 24 dans les logements 25. Le réglage de ces vis permet en outre d'ajuster individuellement la position en Z de chaque élément. Il est également possible de remplacer les pattes de fixation par une embase magnétique qui s'aimante dans les logements de la barrette coulissante. Le réglage des distances de coulissement ou contraintes de position « X » des barrettes coulissantes de fait au moyen de vis 43 (9) qui traversent les perçages 173 de la barrette de base (figure 9) et viennent en appui sur les extrémités anglées des barrettes coulissantes 174 (figure 9). Une graduation métrique 175 permet d'apprécier visuellement la distance de déplacement obtenue. Le déplacement dans l'axe « Z » des barrettes coulissantes se fait au moyen de vis 176 qui fixent les barrettes longitudinales à la platine 7. Plusieurs barrettes peuvent être prévues sur chaque bord de la platine 7, comme illustré notamment sur les figures 1, 2 et 7.

Les éléments d'alignement, notamment les lamelles 17, permettent de maintenir les composants 9 à inspecter visuellement. Elles sont réglables en Z (hauteur), notamment au moyen de poussoirs rotatifs à embouts moletés 43 asservis aux vis de montées, permettant un réglage manuel de la hauteur Z. De ce fait le réglage des barrettes longitudinales à des hauteurs différentes permet la correction de positionnement des pièces non équilibrées.

Les barrettes transversales tendeurs à lamelles 19 (figure 10,) permettent une forte tension de fines lamelles sur toute leur longueur pouvant aller à plus de 100mm. Ces tendeurs sont réglables en Y grâce à des profilés à effet ressort 28 et des vis de réglage 29. La perpendicularité, respectivement le parallélisme des lamelles à l'axe Z est finement réglable grâce aux ressorts 30 et vis 31 places dans les logements correspondants.

Les barrettes transversales magnétiques 21 (figure 10) permettent le maintien magnétique de multiples pièces. Ils peuvent être munis d'adaptateurs / réducteurs permettant de réduire ou augmenter les champs magnétiques et ainsi adapter la force du champ magnétique à la pièce à maintenir. Ces barrettes sont réglables en Y grâce à des profiles à effet ressort 28 et des vis de réglage 29. La perpendicularité, respectivement le parallélisme des aimants à l'axe Z est finement réglable grâce aux ressorts 30 et vis 31 places dans les logements correspondants. A noter que chaque aimant est réglable individuellement.

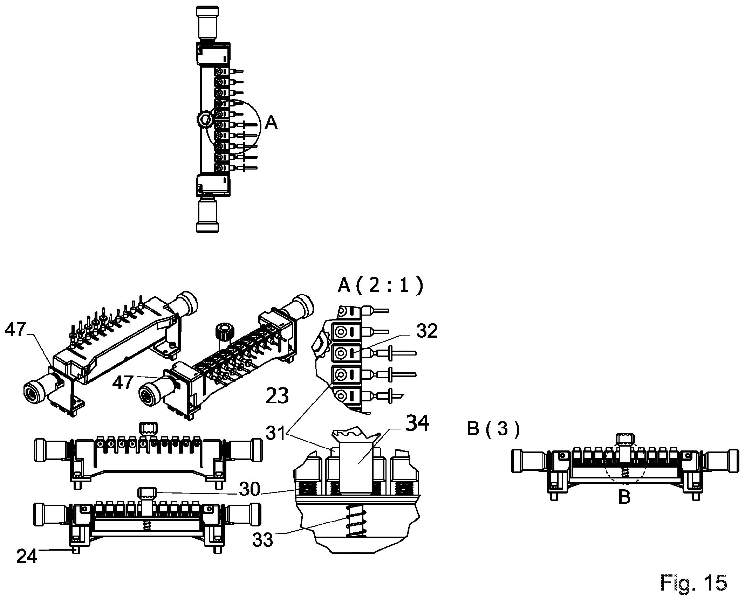

Les barrettes transversales à pointes 23 (figures 10, 15) permettent le maintien sur jauges / piges de multiples pièces. Au niveau individuel, la perpendicularité, des jauges à l'axe Z est finement réglable grâce aux ressorts 30 et vis 31 places dans les logements correspondants. Au niveau collectif, la perpendicularité de la totalité des jauges d'une barrette peut être finement réglée au moyen du ressort 33 et vis/molette correspondants 34. Un marquage ou gravure 32 permet de vérifier l'alignement des divers blocs à aimants.

Les éléments d'alignement sont aussi réglables en X (longueur). De ce fait le réglage des barrettes à des distances différentes permet un positionnement précis de la zone de soutien des pièces.

Les éléments d'alignement sont aussi réglables en Y (profondeur). De ce fait l'alignement de l'axe des zones de positionnement des diverses barrettes peut être finement réglé et assuré.

Les éléments d'alignement sont aussi réglables en inclinaison par rapport à l'axe Z (perpendicularité à l'axe). De ce fait l'alignement perpendiculaire des divers éléments de maintien, lamelles, aimants, jauges, butée peut être finement réglé et assuré.

Des éléments d'alignement 47 permettent une rotation (figures 10, 15) et/ou une révolution des pièces. De ce fait il est possible d'effectuer des mesures de pièces sur divers plans.

Chaque élément d'alignement peut accueillir ou aligner un ou plusieurs composants, par exemple jusqu'à 10 composants.

Pour l'équilibrage d'une pièce (ou d'une rangée de pièces) sur lamelles, un minimum de 2 lamelles réglées à deux hauteurs différentes peut être prévu. On parle alors d'un jeu de lamelles, soutenues par deux paires de barrettes.

Les platines d'alignement permettent d'accueillir de multiples jeux de barrettes longitudinales de lamelles ou de barrettes transversales.

Les platines d'alignement permettent d'utiliser jusqu'à douze barrettes différentes par jeu de positionnement pour une rangée de pièces). Ceci permet un maintien et un alignement d'une pièce à six endroits différents par pièce, assurant non seulement la répétabilité du positionnement Z mais également X et Y.

Chaque type de lamelle peut être réglée à des positions XYZ différentes.

Chacun de ces jeux de lamelles ou barrettes transversales peut être multiplié sur la longueur disponible de barrettes longitudinales de la platine d'alignement.

Le fait d'utiliser plus que 2 paires de barrettes longitudinales permet d'aligner les pièces avec des butées 18 (figures 1, 2 et 7) ce qui d'une part facilite et accélère le positionnement des pièces et d'autre part assure la répétabilité de leur alignement XY.

Le système de barrettes est avantageusement doté d'accessoires (indexes) permettant d'identifier la numérotation des pièces qui sont en cours de mesure ainsi que leur statut d'acceptation (ou résultat de mesure) pendant que les pièces sont encore sur la platine.

Aux platines d'alignement s'ajoutent des couvercles réceptacles adaptés à chaque platine pour une récupération des pièces en une seule opération (et non pièce à pièce) en garantissant toujours la traçabilité de numérotation ou de segmentation des pièces comme sur les platines.

Capot (CAP) : sert à récupérer les pièces mesurées avec ou sans compartimentage. Dans le cas d'un positionnement libre, la récupération des pièces après contrôle se fait au moyen d'un capot de récupération emboîté sur la platine qui peut être renversée pour que les pièces tombent dans le capot. Selon les besoins les capots peuvent également contenir une réplique du gabarit afin de respecter la même répartition des pièces que sur la platine. Les capots peuvent être tapissés de matière amortissante telle qu'une fine mousse ou matière plastique souple.

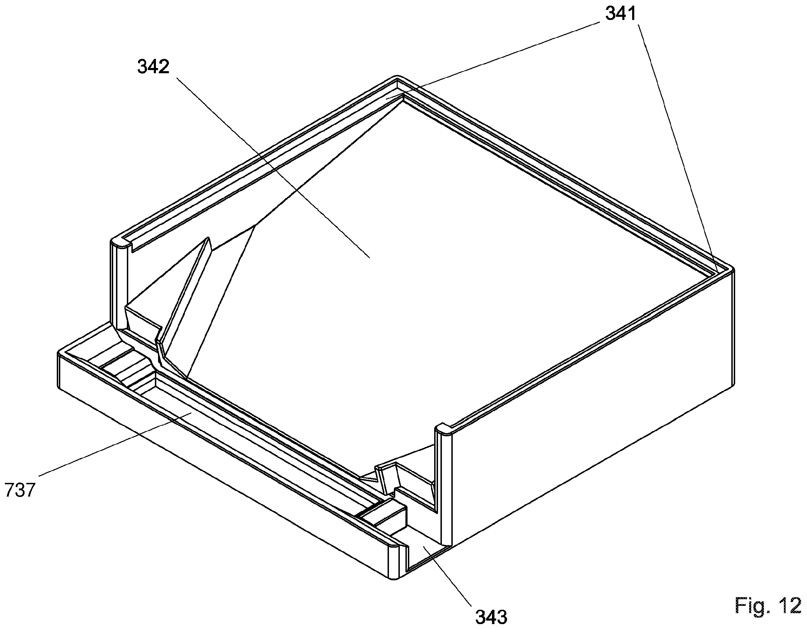

Socle d'alignement (SDA) (figure 12) : socle de table disposant d'un cadre de maintien de platine 341, d'un plateau inférieur incliné 342 et d'un réceptacle des pièces tombées 343. Il sert au maintien des platines coulissantes lors de l'alignement des pièces et d'appui pour les opérateurs(trices) lors de la pose des pièces. Les éventuelles pièces tombées sont automatiquement récupérées dans des bacs longitudinaux 26 (figures 8, 12). Il est aussi possible d'utiliser le poste d'alignement pour récupérer les pièces après contrôle, en inclinant la platine afin que les pièces se déversent sur le plateau incliné et qu'elles soient regroupées dans le bac longitudinal.

Selon un aspect indépendant de l'invention, un logiciel est avantageusement prévu pour indiquer où placer les barrettes et comment les régler. Le logiciel permet à l'utilisateur de déterminer comment équiper sa platine, et notamment quels éléments (barrettes, éléments d'alignement, plots, etc.) sont nécessaires pour inspecter des pièces de forme donnée, et comment ces éléments doivent être placés. Il permet avantageusement aussi de gérer le stock de ces composants chez un utilisateur, en déterminant par exemple quel élément est disponible et quel autre élément est déjà monté sur un support parmi les différents supports équipés de l'utilisateur. En saisissant certaines données de base de la pièce à inspecter, par exemple sa longueur totale, son diamètre 1, son diamètre 2, la distance d'appui de la 1ère barrette et la distance d'appui de la 2ème barrette, un calcul automatique se fait pour indiquer le nombre total de jeux qui peuvent être placés sur la plaquette et l'emplacement « X » exact de chaque barrette (ainsi que les barrettes successives de la plaquette) et également la hauteur « Z » exacte de chaque barrette. Le logiciel tient avantageusement compte de la machine de l'utilisateur, et notamment de sa zone de vision, pour optimiser le placement des éléments sur une platine.

Le système platine / socle de coulissement / socle d'emboitage permet de reproduire le fonctionnement d'une table croisée et ainsi de travailler en palettisation, donc avec une plus grande quantité de pièces que ce que la base de la machine peut initialement accueillir.

Le système platine/ socle de coulissement est doté d'une fonction de déplacement pas-à-pas qui permet de passer d'une pièce à l'autre ou d'une rangée de pièces à l'autre à des pas réguliers et répétables.

Les fait que les platines d'alignement soient interchangeables permet de les dédier à un produit pour sa durée de vie (production), sans devoir changer de réglage à chaque changement de pièce à contrôler.

Pour toutes les pièces comportant une surface d'appui plate garantissant une perpendicularité à l'axe de l'optique sans moyen de soutien, la mesure peut être réalisée en les versant directement sur une surface de contrôle. On parle alors de mesure en vrac. Ce système est essentiellement adapté au mode de détection plein champ, notamment dans le cas de machines de mesure à caméra avec traitement informatique de l'image.

Dans ce cas de mesure en vrac, le support comporte avantageusement les composants principaux suivants :
- Un adaptateur (socle d'emboîtage) interchangeable, choisi selon l'appareil de contrôle optique.
- Une base de chargement (socle de coulissement). Il s'agit d'un socle qui s'emboite avec l'adaptateur et sert à recevoir les plaquettes d'alignement des pièces.
- Une platine coulissante munie d'une surface vitrée ou en saphir qui s'insère dans le socle de coulissement.
- Un gabarit de préalignement des pièces, choisi parmi un set de gabarits différents. Ces gabarits permettent de disposer et de répartir les pièces sur les platines en verre ou saphir d'une manière aussi équilibrée (répartie) que possible et de les maintenir préalignées jusqu'au moment de leur mesure. Les zones vitrées sont ainsi entourées, de sorte que les pièces ne peuvent pas rouler hors de zones et s'éparpiller sur la table de mesure de la machine. Les gabarits d'alignement permettent une disposition préalable des pièces avant leur placement sur la machine. Ceci permet de placer les pièces plus rapidement et dans de meilleures conditions ergonomiques et de vision. Ces gabarits permettent de maintenir les pièces préalablement disposées durant toutes les manipulations de la plaquette et ce jusqu' au moment de la mesure. Les gabarits permettent également d'éviter/limiter que les pièces ne se placent à des endroits qui seraient hors du champ de mesure de la machine.
- Une ou plusieurs unités (couvercles / tiroirs) de récupération des pièces mesurées. Les unités de récupération permettent de récupérer toutes les pièces en une seule opération (au lieu de devoir les récupérer pièce à pièce).

Outre son faible coût, ce système de mesure en vrac permet de tirer pleinement avantage des méthodes de mesure plein champ et d'augmenter le nombre de pièces contrôlées.

## Revendications

1. Support de positionnement (1) pour le positionnement de composants à inspecter pendant leur inspection au moyen d'un appareil de contrôle optique, comportant :
un socle d'emboîtage (3) agencé pour être indexé et centré sur une base de l'appareil de contrôle ;
un socle de coulissement (5) pouvant coulisser selon un axe « Y » dans un plan du socle d'emboîtage perpendiculaire à l'axe optique, le socle d'emboîtage servant d'interface entre l'appareil de contrôle optique et le socle de coulissement (5) ;
une platine (7) pouvant coulisser selon un axe « X » perpendiculaire à l'axe « Y » dans un plan parallèle audit plan du socle de coulissement, le socle de coulissement servant d'interface entre le socle d'emboîtage (3) et la platine coulissante (7) ;
des éléments interchangeables configuré pour être fixé à la platine (7) et comprenant des gabarits (713) pour le positionnement libre de plusieurs composants à mesurer sur ladite platine et des éléments d'alignement tels que des barrettes (15), pour le positionnement aligné de plusieurs composants à mesurer sur ladite platine.

2. Support de positionnement selon la revendication 1, ledit socle d'emboîtage (3) étant choisi parmi un ensemble de socles d'emboîtage compatibles avec différents appareils de contrôle optique.

3. Support de positionnement selon la revendication 1 ou 2, ledit socle de coulissement (5) comportant des aimants (55) pour l'indexation dudit socle de coulissement (5) par rapport audit socle de d'emboîtage (3), des aimants (54) pour l'indexation de ladite platine (7) audit socle de coulissement ainsi que des aimants (53) pour l'indexation du gabarit (713).

4. Support de positionnement selon l'une des revendications 1 à 3, la platine (7) comportant un cadre dans lequel est fixée une vitre (711).

5. Support de positionnement selon la revendication 4, comportant un gabarit (713) monté sur ladite vitre afin de positionner les composants à inspecter.

6. Support de positionnement selon la revendication 5, comportant des aimants (622) pour l'indexation dudit gabarit par rapport au socle de coulissement (5).

7. Support de positionnement selon l'une des revendications 1 à 3, ladite platine (70) comportant plusieurs niveaux, chaque niveau pouvant être équipé de plusieurs variantes d'éléments interchangeables.

8. Support de positionnement selon la revendication 7, les niveaux inférieurs (71,72) comportant une base et un cadre muni de perçages ou de logements pour la fixation amovible des composants des niveaux supérieurs.

9. Support de positionnement selon la revendication 7 ou 8, la platine (7) soutenant les éléments d'alignement interchangeables tels que : barrettes (15), lamelles (17), butée (18), plaquettes (40), indexes, barrettes transversales (19, 21, 22, 23), lesdits éléments d'alignement étant des éléments d'alignement longitudinaux et transversaux.

10. Support de positionnement selon la revendication 9, comportant plusieurs barrettes (15) réglables montées sur la platine (7) de sorte à s'étendre longitudinalement de chaque côté de la platine (7) et permettant de fixer lesdits éléments d'alignement (16, 17, 18, 19, 21, 22, 23) en plusieurs positions sélectionnables, la position longitudinale des barrettes (15) étant ajustable.

11. Support de positionnement selon la revendication 10, la surface supérieure des barrettes (15) étant munie de logements 25 permettant de placer des inserts (16, 37, 38, 39), pattes de fixation (24) ou embases magnétiques des éléments d'alignement dans des emplacements sélectionnables.

12. Support de positionnement selon l'une des revendications 9 à 11, les éléments d'alignement étant réglables selon un axe Z perpendiculaire au plan principal de la platine et selon deux axes X et Y parallèles audit plan principal de la platine.

13. Support de positionnement selon la revendication 12, les éléments d'alignement étant réglables en inclinaison par rapport à l'axe Z (perpendicularité à l'axe).

14. Support de positionnement selon l'une des revendications 9 à 13, au moins certains éléments d'alignement permettant une rotation des composants.

15. Support de positionnement selon l'une des revendications 12 à 14, comportant au moins une courroie pour le réglage de la position desdits composants.

## Patentansprüche

1. Positionierungsträger (1) zur Positionierung von zu inspizierenden Bauteilen während ihrer Inspektion mittels einer optischen Prüfvorrichtung, welcher aufweist:
einen Einstecksockel (3), der dazu eingerichtet ist, an einem Unterteil der Prüfvorrichtung indexiert und zentriert zu werden;
einen Schiebesockel (5), der entlang einer Achse "Y" in einer zur optischen Achse senkrechten Ebene des Einstecksockels gleiten kann, wobei der Einstecksockel als Schnittstelle zwischen der optischen Prüfvorrichtung und dem Schiebesockel (5) dient;
eine Platte (7), die entlang einer zur Achse "Y" senkrechten Achse "X" in einer zur Ebene des Schiebesockels parallelen Ebene gleiten kann, wobei der Schiebesockel als Schnittstelle zwischen dem Einstecksockel (3) und der gleitenden Platte (7) dient; austauschbare Elemente, die dazu ausgebildet sind, an der Platte (7) befestigt zu werden, und die Schablonen (713) zur freien Positionierung mehrerer zu messender Bauteile auf der Platte und Ausrichtelemente wie etwa Stege (15) zur ausgerichteten Positionierung mehrerer zu messender Bauteile auf der Platte umfassen.

2. Positionierungsträger nach Anspruch 1, wobei der Einstecksockel (3) aus einer Menge von Einstecksockeln ausgewählt wird, die mit verschiedenen optischen Prüfvorrichtungen kompatibel sind.

3. Positionierungsträger nach Anspruch 1 oder 2, wobei der Schiebesockel (5) Magnete (55) zur Indexierung des Schiebesockels (5) in Bezug auf den Einstecksockel (3), Magnete (54) zur Indexierung der Platte (7) an dem Schiebesockel sowie Magnete (53) zur Indexierung der Schablone (713) aufweist.

4. Positionierungsträger nach einem der Ansprüche 1 bis 3, wobei die Platte (7) einen Rahmen aufweist, in welchem eine Glasscheibe (711) befestigt ist.

5. Positionierungsträger nach Anspruch 4, welcher eine auf der Glasscheibe angebrachte Schablone (713) aufweist, um die zu inspizierenden Bauteile zu positionieren.

6. Positionierungsträger nach Anspruch 5, welcher Magnete (622) zur Indexierung der Schablone in Bezug auf den Schiebesockel (5) aufweist.

7. Positionierungsträger nach einem der Ansprüche 1 bis 3, wobei die Platte (70) mehrere Niveaus aufweist, wobei jedes Niveau mit mehreren Varianten austauschbarer Elemente ausgestattet werden kann.

8. Positionierungsträger nach Anspruch 7, wobei die unteren Niveaus (71, 72) eine Grundplatte und einen Rahmen, der mit Bohrungen oder mit Aufnahmen zur lösbaren Befestigung der Bauteile der oberen Niveaus versehen ist, aufweisen.

9. Positionierungsträger nach Anspruch 7 oder 8, wobei die Platte (7) die austauschbaren Ausrichtelemente abstützt, wie: Stege (15), Lamellen (17), einen Anschlag (18), Plättchen (40), Indexierelemente, Querstege (19, 21, 22, 23), wobei die Ausrichtelemente längs und quer angeordnete Ausrichtelemente sind.

10. Positionierungsträger nach Anspruch 9, welcher mehrere einstellbare Stege (15) aufweist, die auf der Platte (7) so angebracht sind, dass sie sich auf jeder Seite der Platte (7) längs erstrecken und ermöglichen, die Ausrichtelemente (16, 17, 18, 19, 21, 22, 23) in mehreren auswählbaren Positionen zu befestigen, wobei die Längsposition der Stege (15) verstellbar ist.

11. Positionierungsträger nach Anspruch 10, wobei die Oberseite der Stege (15) mit Aufnahmen (25) versehen ist, die es ermöglichen, Einsätze (16, 37, 38, 39), Befestigungslaschen (24) oder Magnetfüße der Ausrichtelemente an auswählbaren Stellen anzuordnen.

12. Positionierungsträger nach einem der Ansprüche 9 bis 11, wobei die Ausrichtelemente entlang einer Achse Z, die zur Hauptebene der Platte senkrecht ist, und entlang zweier Achsen X und Y, die zur Hauptebene der Platte parallel sind, einstellbar sind.

13. Positionierungsträger nach Anspruch 12, wobei die Ausrichtelemente in der Neigung in Bezug auf die Achse Z (Orthogonalität zur Achse) einstellbar sind.

14. Positionierungsträger nach einem der Ansprüche 9 bis 13, wobei wenigstens einige der Ausrichtelemente eine Drehung der Bauteile ermöglichen.

15. Positionierungsträger nach einem der Ansprüche 12 bis 14, welcher wenigstens einen Riemen zur Einstellung der Position der Bauteile aufweist.

## Claims

1. Positioning support (1) for positioning components to be inspected during their inspection by means of an optical control apparatus, comprising:
a casing base (3) configured to be indexed and centered on a base of the control apparatus,
a sliding base (5) able to slide along an "Y" axis in a plane of the casing base perpendicular to the optical axis, the casing base (3) serving as an interface between the optical control apparatus and the sliding base;
a sliding plate (7) able to slide along an "X" axis perpendicular to the "Y" axis in a plane parallel to said plane of the sliding base, the sliding base (5) serving as an interface between the casing base (3) and the sliding plate (7);
interchangeable elements configured to be fixed to the sliding plate (7) and comprising templates (713) for free positioning of a plurality of components to be measured on the sliding plate (7) and alignment elements, such as bars (15), for aligned positioning of a plurality of components to be measured on said sliding plate.

2. Positioning support according to claim 1, said casing base (3) being chosen from a set of casing bases compatible with different optical control apparatuses.

3. Positioning support according to claim 1 or 2, said sliding base (5) comprising magnets (55) for indexing said sliding base (5) with respect to said casing base (3), magnets (54) for indexing said plate (7) to said sliding base and magnets (53) for indexing the template (713).

4. Positioning support according to any of claims 1 to 3, the plate (7) having a frame in which a glass panel (711) is fixed.

5. Positioning support according to claim 4, comprising a template (713) mounted on said glass panel in order to position the components to be inspected.

6. Positioning support according to claim 5, comprising magnets (622) for indexing said template with respect to the sliding base (5).

7. Positioning support according to any of claims 1 to 3, said plate (7) having several levels, each level being able to be equipped with several variants of interchangeable elements.

8. Positioning support according to claim 7, the lower levels (71, 72) comprising a base and a frame provided with drilled holes or seats for the removable attachment of the components of the upper levels.

9. Positioning support according to claim 7, wherein the plate (7) supporting the interchangeable alignment elements such as: bars (15), slats (17), abutment (18), plaques (40), indexes, transverse bars (19, 21, 22, 23), said alignment elements being longitudinal and transverse alignment elements.

10. Positioning support according to claim 9, comprising a plurality of adjustable bars (15) mounted on the plate (7) so as to extend longitudinally on each side of the plate (7) and making it possible to fix said alignment elements (16, 17, 18, 19, 21, 22, 23) in several selectable positions, the longitudinal position of the bars (15) being adjustable.

11. Positioning support according to claim 10, the upper surface of the bars (15) being provided with seats (25) making it possible to place inserts (16, 37), fixation tabs (24) or magnetic bases of the alignment elements in selectable locations.

12. Positioning support according to any of claims 9 to 11, the alignment elements being adjustable along an axis Z perpendicular to the main plane of the plate and along two X and Y axes parallel to said main plane of the plate.

13. Positioning support according to claim 12, the alignment elements being adjustable in inclination with respect to the axis Z.

14. Positioning support according to any of claims 9 to 13, at least some alignment elements permitting a rotation of the components.

15. Positioning support according to any of claims 12 to 14, having at least one belt for adjusting the position of said components.
